# EUROPEAN PATENT APPLICATION

(11) **EP 4 502 259 A1**
(43) Date of publication of application: **05.02.2025**
(21) Application number: 23780032.1
(22) Date of filing: 23.03.2023
(51) Int. Cl.: D04H 3/16, A41D 31/10

(54) **GARMENT**

(30) Priority: 29.03.2022 JP 2022053117
(71) Applicant: Toray Industries, Inc., Tokyo 103-8666 (JP)
(72) Inventor: KIDO, Tatsuya, Tokyo 103-8666 (JP); TAKEDA, Hiroki, Otsu-shi, Shiga 520-2141 (JP); KOKUBO, Yoshiaki, Tokyo 103-8666 (JP)
(74) Representative: Mewburn Ellis LLP
(86) International application number: PCT/JP2023/011471
(87) International publication number: WO 2023/190021

(57) **Abstract**

Provided is cloth that is excellent in dust protection and liquid protection. In the cloth, a first outermost layer of a layered nonwoven fabric is a nonwoven fabric containing a predetermined amount of an antistatic agent relative to the entire layer, and is located on an outer side of the cloth, a second outermost layer of the layered nonwoven fabric is a nonwoven fabric containing a predetermined amount or less of an antistatic agent relative to the entire layer, and is located on an inner side of the cloth, the joint region includes a seam allowance located on the inner side of the cloth and the tape member, the seam allowance includes a layered region formed by layering a part of one or more of the layered nonwoven fabrics, the layered region includes at least one of a sewn region and a fused region, the seam allowance is covered with the tape member, the tape member is located on the inner side of the cloth, at least both end portions of the tape member in a short-side direction are fixed to the second outermost layer, water pressure resistance (A) of the layered nonwoven fabric is in a predetermined range, and a ratio of water pressure resistance (B) of the joint region to the water pressure resistance (A) is in a predetermined range.

## Description

### TECHNICAL FIELD

The present invention relates to cloth.

### BACKGROUND ART

Conventionally, various cloth in which a plurality of fabric pieces are joined to each other are commercially available, and as a method of joining these cloth, stitching by sewing with a sewing machine or a method of melting and solidifying overlapped fabric pieces to bond or fuse the fabric pieces are mainly used.

As cloth in patent documents, cloth in which a hot melt adhesive made of a urethane-based resin, an acrylicbased resin, a silicon-based resin or the like is inserted between overlapped fabric pieces, and the hot melt adhesive is melted and solidified by superheating and pressure bonding to join a plurality of fabric pieces (Patent Document 1) and the like are disclosed.

As cloth in which liquid protection is imparted to a fabric and a joint region, cloth in which fabric pieces are sewn with a sewing machine or fused using a highly water-resistant and moisture-permeable liquid protective fabric obtained by layering a base fabric and a liquid protective film or a moisture-permeable waterproof film and a sealing tape, and then the fabric pieces are covered with the sealing tape to form a joint region (Patent Documents 2, 3, 4, and 5) and the like are disclosed.

As cloth in which washing durability and sterilization treatment durability are imparted to a fabric and a joint region, cloth in which a polyester fabric is used for a base fabric of the fabric and a polycarbonatebased polyurethane resin is used for a moisture-permeable waterproof film and an adhesive (Patent Document 6) and the like are disclosed.

As cloth in which liquid protection and fire resistance are imparted to a fabric and a joint region, cloth in which a surface of a fabric obtained by blending heat-resistant flame-retardant fibers is treated with aluminum, fabric pieces are sewn with a sewing machine, and then front and back surfaces of the sewn region are sealed with a flame-retardant waterproof tape (Patent Document 7), a raincoat in which a plurality of multilayer nonwoven fabric pieces are sewn, an antistatic agent is applied to an outer surface, and a sealing tape is sealed to the sewn region (Patent Document 8), and the like are disclosed.

### PRIOR ART DOCUMENTS

### PATENT DOCUMENTS

Patent Document 1: Japanese Patent Laid-open Publication No. 2017-186695
Patent Document 2: International Publication No. 2007/034837
Patent Document 3: Japanese Patent Laid-open Publication No. 2009-183849
Patent Document 4: International Publication No. 2016/006418
Patent Document 5: National Publication of International Patent Application No. 2007-508870
Patent Document 6: Japanese Patent Laid-open Publication No. 2013-047397
Patent Document 7: Japanese Patent Laid-open Publication No. 2015-168889
Patent Document 8: Japanese Patent Laid-open Publication No. 2014-009954

### SUMMARY OF THE INVENTION

### PROBLEMS TO BE SOLVED BY THE INVENTION

However, for the cloth in Patent Document 1 in which an adhesive is inserted between overlapped fabric pieces to join the fabric pieces, there was a problem that in a case where one of the surfaces of the fabric pieces to be overlapped is a fabric front surface and the other is a fabric back surface, and compositions of the front surface and the back surface of the fabric pieces are different, the liquid protection of the joint region is inferior.

The cloth in Patent Documents 2 to 6 in which a joint region is formed using a highly water-resistant and moisture-permeable liquid protective fabric obtained by layering a base fabric and a moisture-permeable waterproof film and a sealing tape can easily suppress entry of humidity inside the cloth and water due to moisture permeability and liquid protection. However, there was a problem that when the surface of the cloth is charged due to friction or when dust charged by static electricity approaches the surface of the cloth, static electricity tends to be charged on the surface of the cloth due to electrostatic induction, and thus dust adhesion tends to occur, that is, dust protection is inferior.

For the cloth in Patent Document 7 in which the surface of a fabric obtained by blending heat-resistant flame-retardant fibers is treated with aluminum, fabric pieces are sewn with a sewing machine, and then front and back surfaces of the sewn region are sealed with a flame-retardant waterproof tape, there was a problem that production efficiency is inferior because the front and back surfaces of the sewn region are sealed with the waterproof tape, and the sealed region becomes hard, resulting in inferior comfort as clothes.

For the cloth in Patent Document 8 in which an antistatic agent is applied to the outer surface of the cloth and a sealing tape is sealed to the sewn region, in terms of water pressure resistance of the cloth in examples, no antistatic agent was applied, and there is no disclosure about a decrease in water pressure resistance after application of the antistatic agent. In addition, there was a problem that detailed aspects of a seam allowance and the tape in the sewn region are not disclosed, and in addition, the water pressure resistance of SMS nonwoven fabric is low at just under 500 mmH₂O, resulting in inferior liquid protection.

As described above, none of the conventional cloth can achieve both liquid protection and dust protection, and thus cannot satisfy sufficient performance.

Therefore, an object of the present invention is to solve such problems of the related art and to provide cloth excellent in dust protection and liquid protection.

### SOLUTIONS TO THE PROBLEMS

The cloth of the present invention capable of achieving the above object has the following configuration. That is,
1) Cloth that is composed of a layered nonwoven fabric and members including a tape member in a rectangular shape, and includes a joint region,
   in which a first outermost layer of the layered nonwoven fabric is a nonwoven fabric containing 0.02 to 0.50% by mass of an antistatic agent relative to the entire layer, and is located on an outer side of the cloth,
   a second outermost layer of the layered nonwoven fabric is a nonwoven fabric containing 0.01% by mass or less of an antistatic agent relative to the entire layer, and is located on an inner side of the cloth,
   the joint region includes a seam allowance located on the inner side of the cloth and the tape member,
   the seam allowance includes a layered region formed by layering a part of one or more of the layered nonwoven fabrics,
   the layered region includes at least one of a sewn region and a fused region,
   the seam allowance is covered with the tape member,
   the tape member is located on the inner side of the cloth,
   at least both end portions of the tape member in a short-side direction are fixed to the second outermost layer,
   water pressure resistance (A) of the layered nonwoven fabric measured according to JIS L 1092 (2009) A method is in a range of 1000 to 10000 mmH₂O, and
   a ratio of water pressure resistance (B) of the joint region measured according to JIS L 1092 (2009) A method to the water pressure resistance (A) (water pressure resistance (B)/water pressure resistance (A)) is 0.4 to 1.0.
2) Cloth that is composed of a layered nonwoven fabric and members including a tape member in a rectangular shape, and includes a joint region,
   in which a first outermost layer of the layered nonwoven fabric is a nonwoven fabric containing 0.02 to 0.50% by mass of an antistatic agent relative to the entire layer, and is located on an outer side of the cloth,
   a second outermost layer of the layered nonwoven fabric is a nonwoven fabric containing 0.01% by mass or less of an antistatic agent relative to the entire layer, and is located on an inner side of the cloth,
   the joint region includes at least one of a sewn region and a fused region, and the tape member,
   in at least one of the sewn region and the fused region, surfaces horizontal to a thickness direction at two end portions of at least one of the layered nonwoven fabrics face each other,
   at least one of the sewn region and the fused region is covered with the tape member,
   the tape member is located on the inner side of the cloth,
   at least both end portions of the tape member in a short-side direction are fixed to the second outermost layer,
   water pressure resistance (A) of the layered nonwoven fabric measured according to JIS L 1092 (2009) A method is in a range of 1000 mmH₂O to 10000 mmH₂O, and
   a ratio of water pressure resistance (B) of the joint region measured according to JIS L 1092 (2009) A method to the water pressure resistance (A) (water pressure resistance (B)/water pressure resistance (A)) is 0.4 to 1.0.
3) More preferably, the layered nonwoven fabric includes a first spunbond nonwoven, a meltblown nonwoven, and a second spunbond nonwoven in this order,
   a basis weight of the first spunbond nonwoven is 20 to 50 g/m², and a basis weight of the second spunbond nonwoven is 5 to 30 g/m², and
   the basis weight of the second spunbond nonwoven is smaller than the basis weight of the first spunbond nonwoven.
4) More preferably, the tape member is a layered body including a base material layer and an adhesive resin layer,
   a thickness of the adhesive resin layer is 10 to 200 um, more preferably100 to 200 µm, and
   the adhesive resin layer is in contact with the second outermost layer.
5) More preferably, the layered nonwoven fabric has an air permeability of 2.0 to 40.0 cm³/cm²/sec as measured according to JIS L 1913 (2010) 6.8 (Frazier type method).

### EFFECTS OF THE INVENTION

According to the present invention, it is possible to obtain cloth excellent in dust protection and liquid protection.

### BRIEF DESCRIPTION OF THE DRAWINGS

Fig. 1 is a cross-sectional view of a part including a joint region of cloth according to Embodiment 1 of the present invention.
Fig. 2 is a cross-sectional view of a part including a joint region of cloth according to Embodiment 2 of the present invention.
Fig. 3 is a cross-sectional view of a part including a joint region of cloth according to a modification of Embodiment 2 of the present invention.
Fig. 4 is a partial cross-sectional view of a layered nonwoven fabric.
Fig. 5 is a partial cross-sectional view of a tape member.
Fig. 6 is a perspective view from an outer side of the cloth shown in Fig. 1.
Fig. 7 is an exploded view of the cloth shown in Fig. 6.

### EMBODIMENTS OF THE INVENTION

Hereinafter, the cloth of the present invention will be described in detail with reference to the drawings.

### (Embodiment 1)

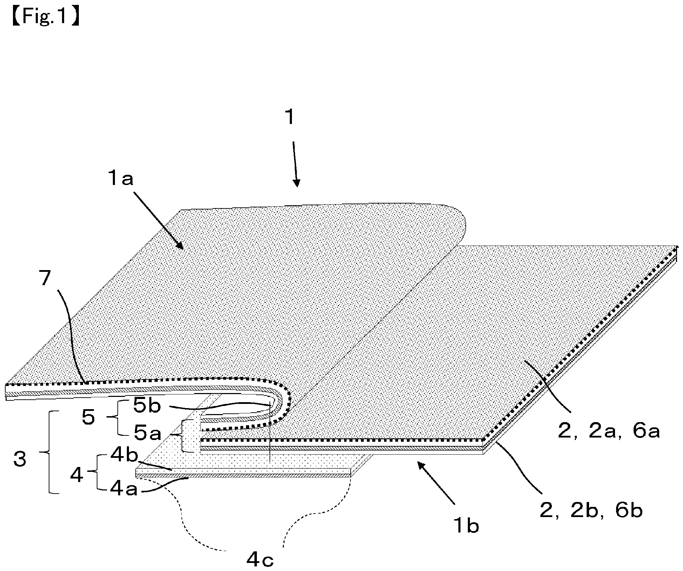

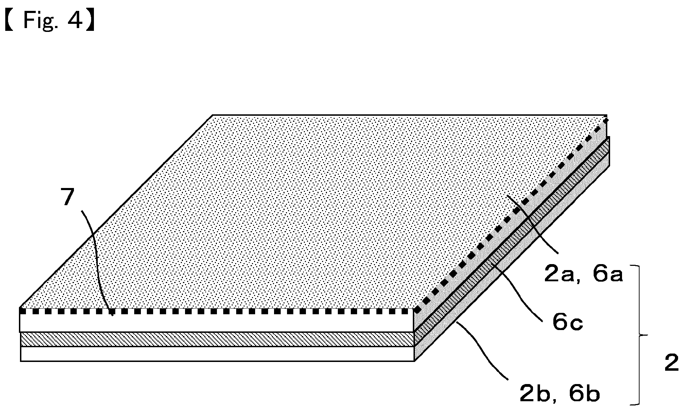

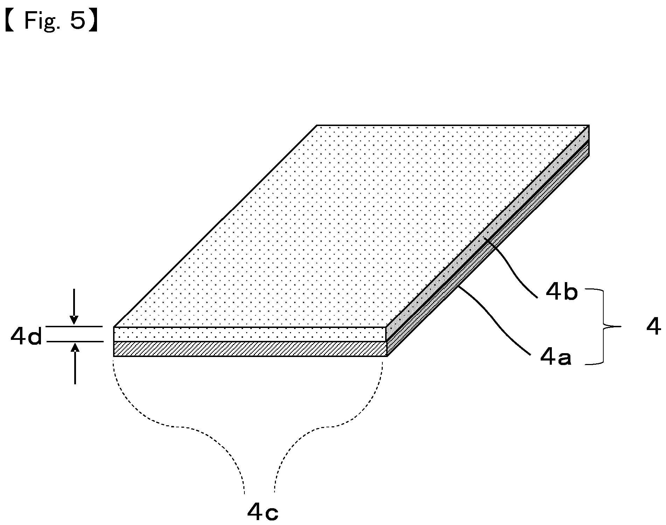

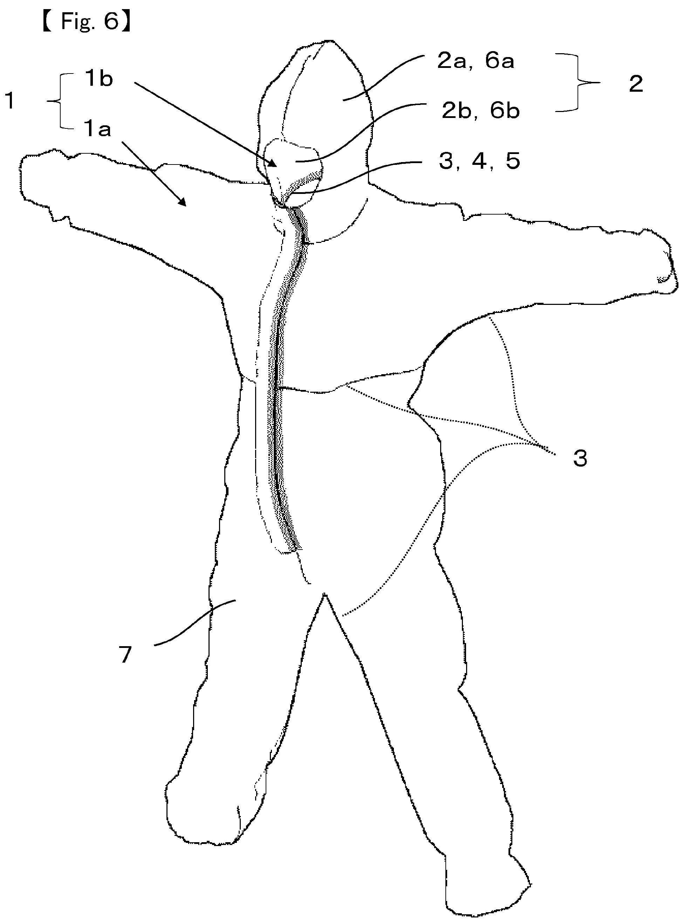

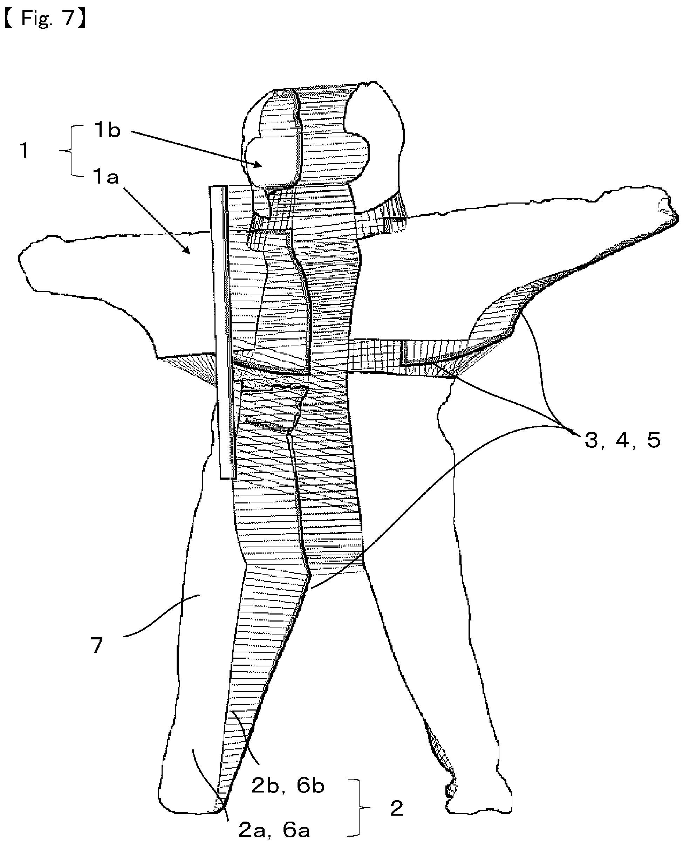

Fig. 1 is a cross-sectional view of a part including a joint region 3 of cloth 1 according to Embodiment 1 of the present invention. Fig. 4 is a cross-sectional view of a part of a layered nonwoven fabric 2. Fig. 5 is a cross-sectional view of a part of a tape member 4. Fig. 6 is a perspective view from an outer side 1a of the cloth 1 shown in Fig. 1. Fig. 7 is an exploded view of the cloth 1 shown in Fig. 6.

The cloth 1 according to Embodiment 1 of the present invention includes the layered nonwoven fabric 2, the tape member 4 in a rectangular shape, and the joint region 3. Here, an inner side of the cloth means a wearer side when the cloth is worn, and an outer side of the cloth means an opposite side of the inner side of the cloth.

The layered nonwoven fabric 2 has a first outermost layer 2a and a second outermost layer 2b, the first outermost layer 2a is located on the outer side 1a of the cloth 1, and the second outermost layer 2b is located on an inner side 1b of the cloth 1.

The layered nonwoven fabric 2 is cut into parts for each part of the cloth 1, and the parts are joined at the joint region 3 to form the cloth 1.

The joint region 3 includes a seam allowance 5 and the tape member 4. Further, the seam allowance 5 has a layered region 5a in which a part of one or more layered nonwoven fabrics 2 is layered, and this layered region 5a further has at least one of a sewn region and a fused region 5b (in the present application, hereinafter, "at least one of a sewn region and a fused region" may be referred to as a "sewn region and the like").

The layered region 5a here refers to a minimum distance side from at least one of the sewn region and the fused region 5b (in the present application, hereinafter, "at least one of the sewn region and the fused region" may be referred to as the "sewn region and the like") to a cut edge in a region where one or more layered nonwoven fabrics 2 are overlapped.

Here, examples of the form of the layered region include the following. For example, in a case where there is one layered nonwoven fabric having a rectangular shape, a part of the layered nonwoven fabric is both end portions of the layered nonwoven fabric in a longitudinal direction, and both end portions overlap to form a layered region. In this case, the layered nonwoven fabric has a tubular shape. Further, for example, in a case where there are two layered nonwoven fabrics having a rectangular shape, one end portion of one layered nonwoven fabric and one end portion of the other layered nonwoven fabric overlap to form a layered region.

As a means for forming the sewn region, there is sewing with a sewing machine or sewing by hand, but sewing with a sewing machine is preferable from a viewpoint of productivity. As a method of sewing with a sewing machine, a method such as lock stitch, overlock, catch stitch, double chain stitch, or flat stitch is preferably used, but any of them may be used, and more preferably, as shown in Fig. 1, the lock stitch is used because it is linear, has a small exposed area and thickness, and is excellent in texture and strength. Further, as a means for forming the fused region, fusion by any process of ultrasonic heating, high frequency heating, and resistance heating is preferably used, but any of them may be used, and more preferably, an ultrasonic processing method is used because of its excellent quality stability and productivity.

### <Impartation of dust protection>

As an aspect of imparting dust protection to the cloth 1 of the present invention, the first outermost layer 2a of the layered nonwoven fabric 2 located on the outer side 1a of the cloth 1 contains 0.02 to 0.50% by mass of an antistatic agent 7 relative to the entire layer. Here, since the first outermost layer 2a is located on the outer side 1a of the cloth 1, electrostatic charge of the surface of the outer side 1a of the cloth 1 is suppressed. Accordingly, adhesion of dust in an outside air environment to the outer side 1a of the cloth 1 is suppressed, and as a result, the dust protection of the cloth 1 is excellent. Note that, the content of the antistatic agent in the first outermost layer is based on the entire first outermost layer.

Note that, it goes without saying that the dust protection of the cloth 1 is not improved even if electrostatic charge of the surface of the inner side 1b of the cloth 1 is suppressed and adhesion of dust to the surface of the inner side 1b of the cloth 1 is suppressed. On the other hand, although details will be described later, in the cloth of the present invention, the content of the antistatic agent in the second outermost layer is 0.01% by mass, and the second outermost layer does not contain an antistatic agent or contains an extremely small amount of the antistatic agent because the cloth is excellent in liquid protection. Note that, the content of the antistatic agent in the second outermost layer is based on the entire second outermost layer.

As factors of adhesion of dust to the cloth 1, there are electrostatic charge of dust and electrostatic induction to the surface of the cloth 1.

Dust floating in the air is usually charged with positive or negative static electricity and is in a charged state. Due to the electrostatic charge of the dust approaching the cloth 1, electricity of opposite polarity is attracted to the surface of the cloth 1, and electrostatic induction occurs. When electrostatic induction occurs, a Coulomb force acts between the dust and the cloth 1, and the dust is attracted and adhered to the cloth 1.

In the present invention, in order to suppress adhesion of charged dust to the surface of the cloth 1 due to electrostatic induction, it is preferable to apply the antistatic agent 7 to the first outermost layer 2a of the layered nonwoven fabric 2 located on a side where the dust and the cloth 1 are in contact with each other, that is, on the outer side 1a of the cloth 1 within the above preferable range.

When the content of the antistatic agent 7 is less than 0.02% by mass, there is a problem that an antistatic effect cannot be sufficiently obtained and the dust protection is inferior, and on the contrary, when the content is 0.50% by mass or more, hydrophilicity of a fiber surface increases and the water pressure resistance decreases. More preferably, the content is in the range of 0.20 to 0.50% by mass.

The antistatic effect, that is, the dust protection of such a layered nonwoven fabric 2 can be measured using the first outermost layer 2a of the layered nonwoven fabric 2 as a measurement surface based on the EN 1149-1-2006 surface resistance. A preferable range of the surface resistance in the cloth 1 of the present invention is 2.5 × 10⁹ Ω or less. When the surface resistance exceeds 2.5 × 10⁹ Ω, the antistatic effect is not sufficiently obtained, and the dust protection is inferior. More preferably, the surface electric resistance value is in the range of 1.5 × 10⁹ or less.

Examples of the type of the antistatic agent 7 include a cationic antistatic agent, an amphoteric antistatic agent, and an anionic antistatic agent. Then, a quaternary ammonium salt compound and an acetate compound of an aliphatic amine correspond to the cationic antistatic agent, a betaine compound, a carboxymethyl amine compound, and an imidazolium compound correspond to the amphoteric antistatic agent, and a sulfate compound, a sulfonic acid compound, and a phosphate compound correspond to the anionic antistatic agent. Among these, an anionic antistatic agent is more preferable, and a phosphoric acid ester compound is still more preferable from a viewpoint of being able to lower surface electric resistance, which is an index of antistatic performance.

A processing method of the antistatic agent 7 may be any of a method of immersing the fibers of the first outermost layer 2a of the layered nonwoven fabric 2 in a treatment liquid containing the antistatic agent 7, a method of kneading the antistatic agent 7 into the fibers of the first outermost layer 2a of the layered nonwoven fabric 2 to perform an antistatic treatment on the fibers themselves, a method coating the fibers of the first outermost layer 2a of the layered nonwoven fabric 2 with a coating agent containing the antistatic agent 7 to perform an antistatic treatment, and the like. Among these, immersion treatment is preferable because an amount of adhesion is easy to control, providing excellent productivity.

An agent adhesion rate of the antistatic agent 7 to the layered nonwoven fabric is determined by the following method. That is, as a first procedure, a layer other than the first outermost layer 2a of the layered nonwoven fabric is removed using No. 1000 sandpaper, the obtained first outermost layer 2a of the layered nonwoven fabric is cut out to a size of 15 cm × 15 cm, and a weight of the obtained first outermost layer 2a of the layered nonwoven fabric is measured to the fifth decimal place in a unit of gram.

As a second procedure, the first outermost layer 2a of the layered nonwoven fabric whose weight has been measured is put into a beaker containing 100 ml of methanol, and extraction with ultrasonic waves is performed for ten minutes. The extract obtained by ultrasonic washing is dried at 40°C, concentrated to 1 ml, and then filtered with a 0.45 µm PTFE disk filter, and the obtained extract filtrate is diluted 10 times, and then measured by LC/MS/MS, LC20A manufactured by SHIMADZU CORPORATION. The antistatic agent used is identified from the obtained result, and an area of a peak portion corresponding to the identified antistatic agent is calculated.

As a third procedure, in order to calculate the agent adhesion rate, the same composition as the antistatic agent identified from the first outermost layer 2a of the layered nonwoven fabric is newly prepared, a 10 fold diluted solution, a 100 fold diluted solution, and a 1000 fold diluted solution are prepared with methanol, respectively, and measurement is performed in the same manner as in the extraction filtrate. A peak area corresponding to the identified antistatic agent is calculated, and a calibration curve of the identified amount of the antistatic agent and the obtained peak area is prepared. The obtained peak area is compared with the calibration curve, and the amount of the antistatic agent adhered to the first outermost layer 2a of the layered nonwoven fabric is calculated.

As a fourth procedure, a value obtained by dividing the amount of the antistatic agent adhered to the first outermost layer 2a of the layered nonwoven fabric by the weight of the first outermost layer 2a of the layered nonwoven fabric measured in advance is rounded off to the first decimal place to obtain an agent adhesion rate (% by mass) of the antistatic agent 7.

It is important that the joint region 3 of the cloth 1 of the present invention has the seam allowance 5 located on the inner side 1b of the cloth in that the outer side 1a of the cloth 1 has a flat shape and dust adhesion and catching on an object in contact with the cloth 1 are suppressed.

As a means for disposing the seam allowance 5 on the inner side 1b of the cloth 1, a method of processing in a state where the surfaces of the outer sides 1a of the cloth 1 of a plurality of parts to be joined are in contact with each other, that is, in a state where the first outermost layers 2a of the layered nonwoven fabric 2 are in contact with each other is preferably used.

### <Impartation of liquid protection>

As a preferable aspect of imparting liquid protection to the cloth 1 of the present invention, it is necessary that the seam allowance 5 of the joint region 3 is covered with the tape member 4 in terms of liquid protection by blocking an entry path of a liquid material existing in the outside air environment from the seam allowance 5.

In the example of Fig. 1, the entry path of the liquid material adhered to the outer side 1a of the cloth 1 to the inner side 1b of the cloth 1 includes a path that first reaches the sewn region and the like 5b of the seam allowance 5 and then reaches the end portion of the seam allowance, or a path that reaches the outermost layer of the layered nonwoven fabric 2 through the sewn region and the like 5b of the seam allowance 5. In the present invention, the tape member 4 covers the seam allowance 5 to suppress entry of the liquid material from the path into the cloth 1.

In a case where the tape member 4 does not cover the seam allowance 5, the path is not blocked, and liquid tends to enter from the seam allowance 5, resulting in inferior liquid protection.

As a means for covering the seam allowance 5 of the joint region 3 with the tape member 4, a method is preferably used in which the tape member 4 is disposed on the seam allowance 5 of the joint region 3 and adhesion processing is performed.

As such an adhesion processing method, hot air heating, resistance heating, high frequency heating, ultrasonic heating and the like are mainly preferably used, but any of them may be used, and more preferably, the hot air heating method is used because it is excellent in productivity and followability to the joint region 3 having a curve.

In the cloth 1 of the present invention, the seam allowance 5 is located on the inner side of the cloth, and the tape member 4 is also located on the inner side 1b of the cloth 1. Accordingly, the number of members on which dust can accumulate outside the outer side 1a of the cloth 1 is reduced, and as a result, the cloth is excellent in dust protection. Further, when the tape member 4 is located on the inner side 1b of the cloth, an adhesive resin layer 4b of the tape member 4 comes into contact with the second outermost layer of the layered nonwoven fabric that is the fabric of the cloth. Since this second outermost layer does not contain an antistatic agent or contains an extremely small amount of the antistatic agent, the second outermost layer has high affinity with the above-mentioned adhesive resin layer 4b, and the tape member 4 and the layered nonwoven fabric 2 are firmly fixed, as a result, a liquid protection performance of the joint region is selected. On the other hand, in a case where the tape member 4 is located on the outer side 1a of the cloth 1, the antistatic agent contained in the first outermost layer makes it difficult for the tape member 4 to adhere to the layered nonwoven fabric that is the fabric of the cloth, and as a result, the liquid protection of the cloth tends to be inferior.

As a means for disposing the tape member 4 on the inner side 1b of the cloth 1, a method is preferably used in which the inner side 1b of the cloth 1, that is, the second outermost layer 2b of the layered nonwoven fabric 2 and the tape member 4 are made to face each other and adhesion processing is performed.

It is necessary that at least both end portions in the short-side direction of the tape member 4 are fixed to the second outermost layer 2b of the layered nonwoven fabric 2 in terms of liquid protection by blocking the entry path of the liquid material existing in the outside air environment from the seam allowance 5. In a case where both end portions of the tape member 4 in the short-side direction are not fixed to the second outermost layer 2b of the layered nonwoven fabric 2, liquid enters from the joint region 3, resulting in inferior liquid protection.

As a means for fixing both end portions of the tape member 4 in the short-side direction to the second outermost layer 2b of the layered nonwoven fabric 2, a method is preferably used in which a dimension of the tape member 4 in the short-side direction is designed to exceeds a minimum dimension from the sewn region 5b of the seam allowance 5 to the end portion of the layered region 5a. More preferably, in a case where the minimum distance from one end portion of the tape member 4 in the short-side direction to the end portion of the layered region 5a of the seam allowance 5 is defined as a first dimension, and the minimum distance from the other end portion of the tape member 4 in the short-side direction to the sewn region and the like 5b of the seam allowance 5 is defined as a second dimension, a method is preferable in which the tape member 4 is disposed so that the first dimension and the second dimension are equal to each other. This is because the entry path of the liquid material can be uniformly covered, and a bias of liquid protection is reduced.

In the cloth 1 of the present invention, an opening for putting on and taking off the cloth in which the layered nonwoven fabric 2 and a fastener are joined and a pocket for storage can be provided separately from the joint region 3. At this time, at a part where the seam allowance 5 at the position has the layered region 5a of the layered nonwoven fabric 2 and a secondary material, there are a plurality of interlayer boundaries of the seam allowance 5, and the entry path of the liquid material is diverse, therefore, it may be necessary to add the position of the tape member 4 or change the position. As described above, in the part where the seam allowance 5 has the layered region 5a of the layered nonwoven fabric 2 and the secondary material, there is no problem in positioning the tape member 4 on the outer side 1a of the cloth 1 or on both the inner side and the outer side. In the examples of Figs. 6 and 7, an opening for putting on and taking off the cloth 1 in which a fastener is joined is provided in a center of the entire surface of the cloth 1, and the tape members 4 at this position are positioned on both the inner side 1b and the outer side of the cloth 1. For this reason, the tape member 4 provided on the outer side 1a of the cloth 1 is visually recognized.

It is important that the content of the antistatic agent 7 in the second outermost layer 2b of the layered nonwoven fabric 2 located on the inner side 1b of the cloth 1 is 0.01% by mass or less relative to the entire second outermost layer from a viewpoint of adhesiveness between the layer and the tape member 4. In other words, unlike the first outermost layer, the second outermost layer does not contain an antistatic agent, or contains an extremely small amount of the antistatic agent. When the content of the antistatic agent exceeds 0.01% by mass, such as when the content of the antistatic agent in the second outermost layer is 0.02% by mass, the adhesiveness between the second outermost layer and the tape member 4 is lowered, and the liquid protection of the cloth is inferior.

As a means for applying the antistatic agent 7, the same means as the processing of the first outermost layer 2a of the layered nonwoven fabric 2 can be used.

The layered nonwoven fabric 2 constituting the cloth 1 of the present invention has a water pressure resistance in the range of 1,000 mmH₂O to 1,0000 mmH₂O as measured according to JIS L 1092 (2009) A method, which is preferable because the cloth 1 has excellent liquid protection. When the water pressure resistance is less than 1,000 mmH₂O, the liquid material tends to enter from the layered nonwoven fabric 2 when the cloth 1 is worn, resulting in inferior liquid protection. When the water pressure resistance exceeds 1,0000 mmH₂O, a temperature inside the cloth 1 tends to rise due to sealing properties of the layered nonwoven fabric 2, resulting in inferior comfort. More preferably, the water pressure resistance is in the range of 1000 mmH₂O to 4000 mmH₂O.

The ratio of the water pressure resistance (A) of the layered nonwoven fabric 2 to the water pressure resistance (B) of the joint region 3 (water pressure resistance (B)/water pressure resistance (A)) is preferably 0.4 to 1.0 from a viewpoint that the water pressure resistance of the layered nonwoven fabric 2 and the joint region 3 is balanced and stability of liquid protection as the cloth 1 is excellent.

When the ratio is less than 0.4 or more than 1, the pressure of liquid invasion is concentrated on the side of the layered nonwoven fabric 2 or the joint region 3 where the water pressure resistance is low, and local contamination tends to occur, resulting in inferior liquid protection. More preferably, the ratio is in the range of 0.6 to 1.0.

As a means for setting the ratio of the water pressure resistance (A) of the layered nonwoven fabric 2 to the water pressure resistance (B) of the joint region 3 to be in the above-described preferable range, there is a method of selecting the tape member 4 having a configuration that has a water pressure resistance equivalent to that of the layered nonwoven fabric 2, or a method of adjusting adhesion of both end portions of the tape member 4 in the short-side direction fixed to the second outermost layer 2b of the layered nonwoven fabric 2 by adhesion conditions. Any one of them may be used, but a combination of these means is more preferable.

### <More preferred aspect of layered nonwoven fabric>

Examples of the material of the fibers constituting the first outermost layer 2a of the layered nonwoven fabric 2 and the second outermost layer 2b of the layered nonwoven fabric 2 include a polyolefin-based resin (for example, polyethylene, polypropylene, a copolymer of ethylene and α-olefin, a copolymer of propylene and α-olefin, and the like), a styrene-based resin (for example, polystyrene, acrylonitrile styrene resin, and the like), a polyetherbased resin (for example, polyether ether ketone, polyacetal, modified polyphenylene ether, aromatic polyether ketone, and the like), a polyester-based resin (for example, polyethylene terephthalate, polytrimethylene terephthalate, polybutylene terephthalate, polyethylene naphthalate, polybutylene naphthalate, polycarbonate, polyarylate, aromatic polyester resin, and the like), a polyimide-based resin, a polyamideimide resin, a polyamide-based resin (for example, an aromatic polyamide resin, an aromatic polyether amide resin, a nylon resin, and the like), a urethane-based resin, an epoxy-based resin, a polysulfone-based resin (for example, polysulfone, polyether sulfone, and the like), a fluorine-based resin (for example, polytetrafluoroethylene, polyvinylidene fluoride, and the like), a cellulose-based resin, a polybenzimidazole resin, and an acryl-based resin (for example, a polyacrylonitrile-based resin obtained by copolymerizing an acrylic acid ester, a methacrylic acid ester, or the like, a modacrylic resin obtained by copolymerizing acrylonitrile and vinyl chloride or vinylidene chloride, or the like).

Among these, the polyolefin-based resin is preferable from a viewpoint of excellent productivity and texture of the layered nonwoven fabric 2. Among the polyolefin-based resins, polyethylene and polypropylene are particularly preferable because they have low moisture-absorption properties, are excellent in skin separation of the fabric to the skin surface after sweating, and can provide greater comfort during work.

The cloth 1 of the present invention can be used by directly layering the fibers of the first outermost layer 2a of the layered nonwoven fabric 2 and the fibers of the second outermost layer 2b of the layered nonwoven fabric 2. Here, in order to impart strength and a plurality of functionalities, it is preferable to include another nonwoven fabric layer as an intermediate layer between the first outermost layer 2a of the layered nonwoven fabric 2 and the second outermost layer 2b of the layered nonwoven fabric 2.

Examples of the structure of the layered nonwoven fabric 2 include a lamination layer of one or more nonwoven fabrics selected from the group consisting of a spun lace nonwoven, a spunbond nonwoven, a meltblown nonwoven 6c, and a needle punch nonwoven. Among these, it is preferable to layer a spunbond nonwoven having high productivity and high strength and air permeability and a meltblown nonwoven 6c having high water pressure resistance.

As a more preferable configuration of the layered nonwoven fabric 2, a first spunbond nonwoven 6a, a meltblown nonwoven 6c, and a second spunbond nonwoven 6b are provided in this order, which provides excellent strength, productivity, and cost, and also make it easier to obtain the preferable water pressure resistance of the layered nonwoven fabric 2.

The first spunbond nonwoven 6a herein corresponds to the first outermost layer 2a of the layered nonwoven fabric 2, and the second spunbond nonwoven 6b corresponds to the second outermost layer 2b of the layered nonwoven fabric 2.

The basis weight of the first spunbond nonwoven 6a is preferably 20 to 50 g/m² because this makes it easier to set the amount of adhesion of the antistatic agent 7 to the first outermost layer 2a of the layered nonwoven fabric 2 within the preferable range. In a case where the basis weight of the first spunbond nonwoven 6a is less than 20 g/m², the antistatic agent 7 in the first outermost layer 2a of the layered nonwoven fabric 2 is less likely to adhere, resulting in inferior dust protection. In a case where the basis weight exceeds 50 g/m², the weight of the cloth 1 increases. More preferably, the basis weight is in the range of 25 to 40 g/m².

The basis weight of the second spunbond nonwoven 6b is 5 to 30 g/m², which makes it easier to set the amount of adhesion of the antistatic agent 7 to the second outermost layer 2b of the layered nonwoven fabric 2 within the preferable range. In addition, it is preferable because both end portions of the tape member 4 in the short-side direction can easily fixed to the second outermost layer 2b of the layered nonwoven fabric 2. When the basis weight of the second spunbond nonwoven 6b is 5 g/m² or more, the strength is excellent. When the basis weight is 30 g/m² or less, the tape member 4 and the second outermost layer 2b of the layered nonwoven fabric 2 can be easily adhered to each other, and the water pressure resistance can be easily obtained at the joint region 3, that is, the liquid protection is excellent. More preferably, the basis weight is in the range of 10 to 25 g/m².

Such a basis weight was measured according to JIS L 1096 (2010) 8.3.2-A method, and the mass (g/m²) per 1m² under a standard state was determined.

As means for adjusting the basis weight of the first spunbond nonwoven 6a and the second spunbond nonwoven 6b, adjustment of a spinning flow rate or a stretching rate of fibers from a spinneret, adjustment of a collection conveyor speed, a combination thereof, and the like are preferably used.

It is preferable that the basis weight of the second spunbond nonwoven 6b is smaller than the basis weight of the first spunbond nonwoven 6a because both end portions of the tape member 4 in the short-side direction can be easily fixed to the second outermost layer 2b of the layered nonwoven fabric 2, which is a side with a lower basis weight, and the water pressure resistance of the joint region 3 is excellent.

When the basis weight of the second spunbond nonwoven 6b is lower than the basis weight of the first spunbond nonwoven 6a, the antistatic agent 7 in the first outermost layer 2a of the layered nonwoven fabric 2 can be easily adhered, providing excellent dust protection. Furthermore, the adhesion between the tape member 4 and the second outermost layer 2b of the layered nonwoven fabric 2 is increased, and the water pressure resistance of the joint region 3 can be easily obtained, that is, the liquid protection is excellent.

### <More preferred aspect of tape member>

As a more preferable form of the tape member 4, the tape member 4 is a layered body including a base material layer and an adhesive resin layer, which makes it easier to fix both end portions of the tape member 4 in the short-side direction to the second outermost layer 2b of the layered nonwoven fabric 2 due to impregnation and permeability of the adhesive resin layer 4b of the tape member 4. In addition, it is preferable because a base material layer 4a of the tape member 4 serves as a waterproof layer, the water pressure resistance, that is, the liquid protection of the joint region 3, can be easily increased.

As the material of the base material layer, it is preferable to mainly use a fiber woven or knitted fabric, a nonwoven fabric, a film alone, or a layered body, because they are excellent in flexibility. More preferably, the material is a film or a high-density woven fabric, which makes it difficult for the thickness to be visually recognized and provides excellent appearance quality.

The thickness of the adhesive resin layer 4b of the tape member 4 is 10 to 200 µm and the adhesive resin layer is in contact with the second outermost layer, which makes it easier to seal and close a step formed by the seam allowance 5 located on the side of the second outermost layer of the layered nonwoven fabric 2 and the layered region 5a of the layered nonwoven fabric 2 in the joint region 3. In other words, it is preferable because the joint region 3 has excellent water pressure resistance, that is, excellent liquid protection.

When the thickness of the adhesive resin layer is 10 µm or more, a gap can be easily filled between the tape member 4 and the seam allowance 5, that is, the step of the layered region 5a of the layered nonwoven fabric 2, and the water pressure resistance can be easily obtained at the joint region 3, that is, the liquid protection is excellent. When the thickness of the adhesive resin layer is 200 µm or less, the thickness of the adhesive resin layer is small, the joint region 3 can be easily softened, and the adhesive resin is less likely to protrude around the tape member 4 and the seam allowance 5, that is, the layered region 5a of the layered nonwoven fabric 2, providing excellent appearance quality. More preferably, the thickness is in the range of 30 to 100 µm.

The thickness of such a bonded region was measured according to JIS K 7130: 1999 plastic-film and sheetthickness measurement method. As a means for adjusting the thickness of the bonded region, depending on a manufacturing method, any method may be used, such as various molding methods such as T-die, injection, and inflation, and coating methods such as knife over coating and gravure. T-die molding is preferable in terms of adaptive thickness, shape, and the like.

As a means for forming the adhesive resin layer, a coating method or a lamination method is preferably used. The coating method may be any method as long as it is a method for forming a film, such as a method in which a resin is dry-bonded to the base material layer or wetsolidified. Further, silica addition, dry foaming by addition of a foaming agent, formation of microporous polyurethane by wet-coagulation, provision of irregularities with an embossing roller, and the like can be used in order to adjust the coefficient of static friction or to reduce the weight. Titanium oxide, carbon black, a pigment, an antioxidant, an ultraviolet absorber, a light stabilizer, a flame retardant, and the like may be appropriately contained in the resin film.

As the type of the resin constituting the adhesive resin layer, an organic adhesive is mainly used, and the type of the organic adhesive is roughly classified into a natural resin-based adhesive such as natural rubber casein, a semi-synthetic-based adhesive such as cellulose acetate, and a synthetic resin-based adhesive using polyolefin, polyurethane, acrylic, or the like. Preferably, a synthetic resin-based adhesive is preferable in terms of workability and cost.

Resin components of the synthetic resin-based adhesive is subdivided into a resin-based component using polyurethane, polyester, PVA, vinyl chloride, an acrylic resin, polyethylene, an ethylene-vinyl acetate polymer, a polyamide-based resin, a polyolefin-based resin, and the like, an elastomer-based component using silicone rubber, nitrile rubber, and the like, and a composite-based component such as nylon epoxy, vinyl phenolic, and the like. More preferably, the polyolefin-based component is preferable because it has high workability and has excellent heat resistance, adhesive strength, and durability due to a cross-linking reaction with moisture (moisture) contained in the air.

Solidification and reaction forms of the synthetic resin-based adhesive includes a dry solidification type such as a water-soluble type, a latex type, and a dispersion type, a chemical reaction type in which a crosslinking reaction occurs by mixing a main agent and a curing agent, and curing is performed, a heat melting type in which the adhesive is solid at room temperature, but melted by heating, and fixed when cooled, a pressure sensitive type in which a high viscosity fluid liquid is pressurized to create an adhesive, and a moisture-curing type in which the adhesive is cured by reacting with moisture in the air.

More preferably, the heat melting type (thermoplastic hot melt) and the moisture-curing type are preferable because they have excellent adhesive strength at a boundary surface between the adhesive resin layer and the second outermost layer 2b of the layered nonwoven fabric 2.

### <Impartation of air permeability>

It is preferable that the layered nonwoven fabric 2 has an air permeability of 2.0 to 40.0 cm³/cm²/sec as measured according to JIS L1913 (2010) 6.8 (Frazier type method) because of excellent air permeability of the cloth 1.

When the air permeability is 2.0cm³/cm²/sec or more, the temperature inside the cloth 1 is less likely to rise when the cloth 1 is worn, providing excellent air permeability, and when the air permeability is 40.0cm³/cm²/sec or less, mist-like scattered matters is less likely to flow in from the layered nonwoven fabric 2, providing excellent protective properties. More preferably, the air permeability is in the range of 4.0 to 20.0 cm³/cm²/sec.

As a means for imparting air permeability, any method may be used, such as a method of adjusting the fiber diameter, basis weight, or density of the layered nonwoven fabric 2, and a method of changing these for each layer of the layered nonwoven fabric 2. However, the method of adjusting the basis weight of the layered nonwoven fabric 2 is preferable from a viewpoint of being able to achieve both the dust protection and the liquid protection. More preferably, the basis weight is set to be within the preferred range of the basis weight of the first spunbond nonwoven 6a and the second spunbond nonwoven 6b described above.

### (Embodiment 2)

Next, cloth 1 according to Embodiment 2 will be described.

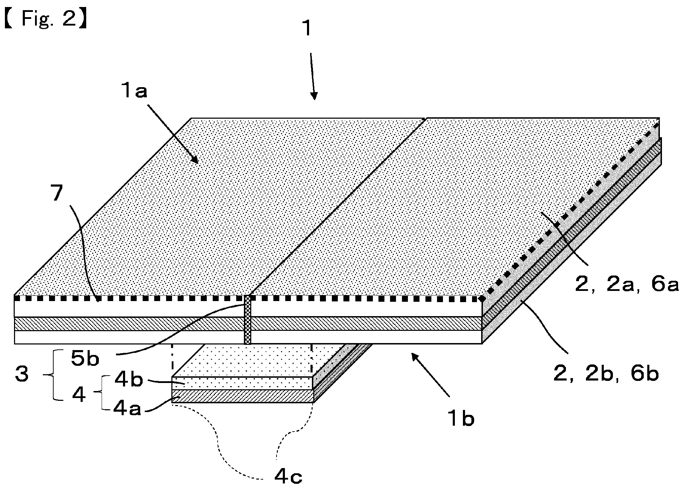

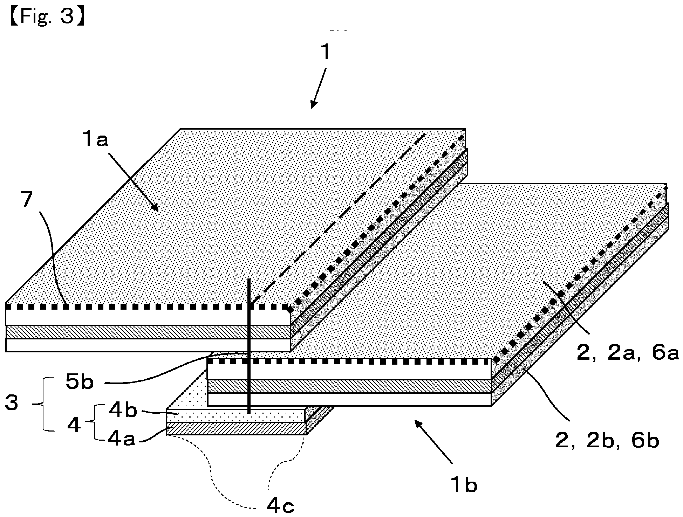

Fig. 2 is a cross-sectional view of the cloth 1 according to Embodiment 2 of the present invention. Fig. 3 is a cross-sectional view of cloth 1 according to a modification of Embodiment 2 of the present invention. Fig. 6 is a perspective view from an outer side 1a of the cloth 1 shown in Fig. 1. Fig. 7 is an exploded view of the cloth 1 shown in Fig. 6.

Similar to Embodiment 1, the cloth 1 according to Embodiment 2 of the present invention is composed of a layered nonwoven fabric 2 and members including a tape member 4 in a rectangular shape, and further includes a joint region 3. Hereinafter, main differences between the cloth 1 according to the Embodiment 2 and the cloth 1 according to Embodiment 1 will be described.

The layered nonwoven fabric 2 is cut into parts for each part of the cloth 1, and the parts are joined at the joint region 3 to form the cloth 1. This joint region 3 is composed of at least one of a sewn region and a fused region 5b, and the tape member 4.

In Embodiment 2, the joint region 3 is different from the sewn region included in the cloth of Embodiment 1, in at least one of the sewn region and the fused region described above, surfaces horizontal to the thickness direction at two end portions of at least one layered nonwoven fabric face each other. In other words, the joint region 3 in the Embodiment 2 does not have a seam allowance 5 having a layered region 5a in which a part of the layered nonwoven fabric 2 is layered, as in the cloth of Embodiment 1.

Here, as two end portions of one layered nonwoven fabric, for example, in a case where the layered nonwoven fabric has a rectangular shape, both end portions in the longitudinal direction can be exemplified, and in a state where surfaces horizontal to the thickness direction at the both end portions face each other, this layered nonwoven fabric becomes a tubular shape. Further, as two end portions of two layered nonwoven fabrics, for example, in a case where the two layered nonwoven fabrics are both in a rectangular shape, one end portion of one layered nonwoven fabric and one end portion of the other layered nonwoven fabric can be exemplified, and surfaces horizontal to the thickness direction of these two end portions face each other.

Note that, the surface horizontal to the thickness direction of the layered nonwoven fabric is a concept that includes a surface substantially horizontal to the thickness direction, and is also a concept that includes common sense as a cut surface of the layered nonwoven fabric.

In the example of Fig. 2, the joint region 3 is formed by butting the end portions of the parts of the layered nonwoven fabric 2 together, forming a sewn region by stitching or a fused region by fusion on the butted region, and covering the sewn region and the like 5b with the tape member 4.

Further, similar to the cloth of Embodiment 1, also in the cloth of Embodiment 2, the tape member is located on the inner side of the cloth. The reason for this is similar to the description of the cloth of Embodiment 1. In other words, the first outermost layer needs to contain an antistatic agent in a specific content for the reason of making the dust protection of the cloth excellent. The second outermost layer does not contain an antistatic agent or contains an extremely small amount of the antistatic agent for the reason that the second outermost layer is excellent in adhesion to the tape member while it is not found necessary to suppress charging. Therefore, when the tape member is located on the inner side of the cloth, the adhesive resin layer of the tape member inevitably comes into contact with the second outermost layer, and the layered nonwoven fabric and the tape member are firmly fixed.

The entry path of the liquid material into the cloth 1 in the present embodiment includes a path through which the liquid material enters from a sewn region or a fused region between the parts of the layered nonwoven fabric 2 butted with each other. In the present invention, the tape member 4 covers the sewn region and the like 5b to suppress entry of the liquid material from the path into the cloth 1.

In the example of Fig. 3, the joint region 3 is formed by partially overlapping a part of the parts of the layered nonwoven fabric 2 in parallel, forming a sewn region by stitching or a fused region by fusion in the overlapped region, and covering the sewn region and the like 5b with the tape member 4.

The entry path of the liquid material into the cloth 1 in the present embodiment includes, as a first path, a path through which the liquid material enters from the sewn region or the fused region on the side of the layered nonwoven fabric 2 located on an upper side of the parts of the layered nonwoven fabric 2 overlapped each other, that is, on an outermost side of the cloth 1, and reaches the sewn region or the fused region on the side of the layered nonwoven fabric 2 located on a lower side of the parts of the layered nonwoven fabric 2, that is, on an innermost side of the cloth 1 through the sewn region or the fused region. As a second path, there is a path through which the liquid material enters from the sewn region or the fused region on a boundary surface between the parts of the layered nonwoven fabric 2 overlapped each other. In the present invention, the tape member 4 covers the sewn region and the like 5b to suppress entry of the liquid material from the path into the cloth 1.

Embodiment 2 of the cloth of the present invention may be similar to Embodiment 1 except for the above difference.

### EXAMPLE

Hereinafter, the present invention will be described more specifically with reference to examples and comparative examples, but the present invention is not limited thereto. Note that, the cloth used in examples and comparative examples was evaluated by the following method.

### [Measurement method]

### (1) Basis weight

According to JIS L1096-2010, two test pieces of 200 mm × 200 mm were collected from each of the first outermost layer 2a of the layered nonwoven fabric and the second outermost layer 2b of the layered nonwoven fabric, the mass of each test piece was measured to determine the mass per unit area, and an average value of each test piece was used. The unit was g/m².

### (2) Water pressure resistance

The water pressure resistance of the layered nonwoven fabric 2 and the joint region 3 was measured by applying water pressure to the test piece at a pressure rising rate of 60 cm/min according to JIS L1092-2009 low water pressure resistance method, measuring the water pressure at a point of time when three drops of water were discharged, and using the average value of three measurements. The unit was mmH₂O.

### (3) Water pressure resistance ratio

The ratio of the water pressure resistance (A) of the layered nonwoven fabric to the water pressure resistance (B) of the joint region measured in the previous paragraph was calculated by the following equation (water pressure resistance (B) ÷ water pressure resistance (A)), and the value was set to two decimal places.

### (4) Content of antistatic agent

The content of the antistatic agent with respect to the first outermost layer 2a of the layered nonwoven fabric and the content of the antistatic agent with respect to the second outermost layer 2b of the layered nonwoven fabric were determined for each layer by the following procedure. As the first procedure, a layer other than the first outermost layer 2a of the layered nonwoven fabric was removed using No. 1000 sandpaper, the obtained first outermost layer 2a of the layered nonwoven fabric was cut out to a size of 15 cm × 15 cm, and the weight of the obtained first outermost layer 2a of the layered nonwoven fabric was measured to the fifth decimal place in the unit of gram. As the second procedure, the first outermost layer 2a of the layered nonwoven fabric whose weight had been measured was put into a beaker containing 100 ml of methanol, and extraction with ultrasonic waves was performed for ten minutes. The extract obtained by ultrasonic washing was dried at 40°C, concentrated to 1 ml, and then filtered with a 0.45 µm PTFE disk filter, and the obtained extract filtrate was diluted 10 times, and then measured by LC/MS/MS, LC20A manufactured by SHIMADZU CORPORATION. From the obtained result, the antistatic agent used was identified, and the areas of the peak portion corresponding to the identified antistatic agent was calculated.

As the third procedure, in order to calculate the agent adhesion rate, the same composition as the antistatic agent identified from the first outermost layer 2a of the layered nonwoven fabric was newly prepared, a 10 fold diluted solution, a 100 fold diluted solution, and a 1000 fold diluted solution were prepared with methanol, respectively, and measurement was performed in the same manner as in the extraction filtrate. A peak area corresponding to the identified antistatic agent was calculated, and a calibration curve of the identified amount of the antistatic agent and the obtained peak area was prepared. The obtained peak area was compared with the calibration curve, and the amount of the antistatic agent adhered to the first outermost layer 2a of the layered nonwoven fabric was calculated.

As the fourth procedure, a value obtained by dividing the amount of the antistatic agent adhered to the first outermost layer 2a of the layered nonwoven fabric by the weight of the first outermost layer 2a of the layered nonwoven fabric measured in advance was rounded off to the first decimal place, and this was used as the content of the antistatic agent in the first outermost layer 2a of the layered nonwoven fabric. The unit was % by mass. Also for the second outermost layer 2b of the layered nonwoven fabric, the content of the antistatic agent was calculated in the same manner as described above.

### (5) Surface electric resistance

The surface electric resistance of an antistatic dust protective fabric was measured using a surface resistance obtained from a test piece having a size of 12 cm × 12 cm according to EN1149-1-2006, using the first outermost layer 2a of the layered nonwoven fabric as a measurement surface. The unit was Ω.

### (6) Thickness of adhesive resin layer of tape member

The thickness of the adhesive resin layer 4b of the tape member was determined as follows: a cross section of the tape member 4 was cut out, a platinum-palladium alloy was deposited on the cross section, the entire thickness of the tape member 4 was measured from an image taken by a scanning electron microscope (SEM) (Model S-4000 manufactured by Hitachi, Ltd.), the thickness of the base material layer 4a of the tape member was then measured, the thickness of the base material layer was subtracted from the previously obtained entire thickness of the tape member 4, and the subtracted value was defined as the thickness of the adhesive resin layer 4b of the tape member. The unit was µm.

### (7) Air permeability

The air permeability of the layered nonwoven fabric 2 was measured as the amount of air passing through a test piece having a size of 15 cm × 15 cm according to JIS L 1913-2010 Frazier type method. The average value of the obtained three measurements of the amount of air passing through was used. The unit was cm³/cm²/sec, and was valid up to the first decimal place.

### [Evaluation]

### (8) Liquid protection of layered nonwoven fabric 2

The liquid protection of a body part of the cloth, that is, the layered nonwoven fabric 2 was evaluated according to criteria in Table 1. The higher the parameter score, the better the liquid protection.

### (9) Liquid protection of joint region

The liquid protection of a joint position between the parts of the cloth, that is, the joint region 3 was evaluated according to the criteria in Table 1. The higher the parameter score, the better the liquid protection.

### (10) Dust protection

The dust protection of the cloth was evaluated according to the criteria in Table 1. The higher the parameter score, the better the dust protection.

### (11) Comprehensive evaluation

The sum of the evaluation scores of the liquid protection, dust protection, and air permeability as evaluation items was calculated, and was used as a comprehensive evaluation. The higher the evaluation score, the better the cloth overall, and a case where an evaluation result was 4 points or more was regarded as good cloth. Evaluation criteria are shown in Table 2.

**[Table 1]**

| Score | Dust protection | Liquid protection (layered nonwoven fabric) | Liquid protection (joint region) |
|---|---|---|---|
| 3 | Surface resistance: less than 1.5 × 10⁹ | Water pressure resistance of layered nonwoven fabric: 1200 mmH₂O or more | Ratio of water pressure resistance between joint region and layered nonwoven fabric: 0.8 or more and less than 1.0 |
| 2 | Surface resistance: 1.5 × 10⁹ or more and less than 2.0 × 10⁹ | Water pressure resistance of layered nonwoven fabric: 1100 mmH₂O or more and less than 1200 mmH₂O | Ratio of water pressure resistance between joint region and layered nonwoven fabric: 0.6 or more and less than 0.8 |
| 1 | Surface resistance: 2.0 × 10⁹ or more and less than 2.6 × 10⁹ | Water pressure resistance of layered nonwoven fabric: 1000 mmH₂O or more and less than 1100 mmH₂O | Ratio of water pressure resistance between joint region and layered nonwoven fabric: 0.4 or more and less than 0.6 |
| -1 | Surface resistance: 2.6 × 10⁹ or more and less than 1.0 × 10¹⁰ | Water pressure resistance of layered nonwoven fabric: 900 mmH₂O or more and less than 1000 mmH₂O | Ratio of water pressure resistance between joint region and layered nonwoven fabric: 0.3 or more and less than 0.4 |
| -2 | Surface resistance: 1.0 × 10¹⁰ or more and less than 1.0 × 10¹¹ | Water pressure resistance of layered nonwoven fabric: 800 mmH₂O or more and less than 900 mmH₂O | Ratio of water pressure resistance between joint region and layered nonwoven fabric: 0.2 or more and less than 0.3 |
| -3 | Surface resistance: 1.0 × 10¹¹ or more | Water pressure resistance of layered nonwoven fabric: less than 800 mmH₂O | Ratio of water pressure resistance between joint region and layered nonwoven fabric: 0.1 or more and less than 0.2 |

**[Table 2]**

| Score | Comprehensive evaluation |
|---|---|
| 7 or more | Very superior |
| 4 to 6 | Superior |
| 0 to 4 | Inferior |
| Less than 0 | Very inferior |

### (Example 1)

The cloth shown in Figs. 1 and 4 to 7, that is,
as a configuration of the layered nonwoven fabric 2, a polypropylene spunbond nonwoven having a basis weight of 45 g/m² was used, a mangle treatment was performed using a solution obtained by mixing an anionic antistatic agent in pure water as the antistatic agent 7, a coating amount of the antistatic agent 7 was adjusted to 0.135 g/m², and coating was performed so that the content of the antistatic agent was 0.3% by mass. The polypropylene spunbond nonwoven after the mangle treatment was dried at 135°C for one minute with a pin tenter, and this was used as the second outermost layer 2a of the layered nonwoven fabric 2.

Next, by using a polypropylene spunbond nonwoven having a basis weight of 25 g/m² and setting the coating amount of the antistatic agent 7 to 0 g/m², the content of the antistatic agent was set to 0% by mass, and this was used as the second outermost layer 2b of the layered nonwoven fabric 2.

Next, as an intermediate layer of the layered nonwoven fabric 2, a polypropylene meltblown nonwoven 6c having an average fiber diameter of 1.6 µm and a basis weight of 15 g/m² was used.

The obtained first outermost layer 2a, the intermediate layer, and the second outermost layer 2b of the layered nonwoven fabric were layered in this order, and layered and integrated in an embossing device under the conditions of a temperature of 120°C, a pressure of 60 kg/m², and a speed of 10 m/min to obtain a layered nonwoven fabric 2.

In the configuration of the tape member 4, a resin mainly composed of a polyolefin-based thermoplastic hot melt resin, that is, a polyolefin-based resin having hot melt adhesiveness and a melting point temperature of 85°C was used. The resin was discharged and stretched in a sheet shape onto release paper by an extrusion method so as to have a film thickness of 150 µm, a stress at 50% elongation of 3.4 MPa, and a breaking strength of 26.7 MPa, and then separated from the release paper to obtain an adhesive resin layer, which was used as the adhesive resin layer 4b of the tape member 4.

Next, as the base material layer 4a of the tape member 4, a film was obtained in which a resin mainly composed of a polypropylene resin having a softening point of 60°C and a melting point of 115°C was used as a raw material, and the film was discharged and stretched in a sheet shape so as to have a film thickness of 50 µm, a stress at 50% elongation of 0.5 MPa, and a breaking strength of 26 MPa.

The adhesive resin layer 4b was layered on the obtained base material layer 4a of the tape member 4 to obtain a tape member 4 consisting of the base material layer 4a and the adhesive resin layer 4b. Note that, the tape member 4 was formed by slit molding so that a width of the tape member 4, that is, the dimension between the end portions 4c in the short-side direction was 22 mm.

Next, the layered nonwoven fabric 2 was cut into a part shape of the cloth shown in Figs. 6 to 7, and the cut parts were sewn together with a sewing machine to form a seam allowance 5 consisting of the sewn region 5b and the layered region 5a. Note that, an exposure direction of the seam allowance 5 was set to the inner side of the cloth 1.

Next, the tape member 4 was disposed on the inner side of the cloth, the seam allowance 5 was covered with the adhesive resin layer 4b of the tape member 4, and adhesion processing was performed using a hot air heating type heat sealer under the conditions of a roller portion heating temperature of 90°C, a pressure of 0.4 MPa, and a speed of 2 m/min. Both the end portions 4c of the tape member 4 in the short-side direction were fixed in contact with the second outermost layer 2b of the layered nonwoven fabric 2, and the tape member 4 extended along the longitudinal direction of the seam allowance 5 to form the joint region 3 having the tape member 4 in a rectangular shape, thereby obtaining cloth 1.

The water pressure resistance of the layered nonwoven fabric 2 of the obtained cloth 1, the ratio of the water pressure resistance between the joint region 3 and the layered nonwoven fabric 2, the content of the antistatic agent 7, the surface electric resistance, the air permeability, and the thickness 4d of the adhesive resin layer of the tape member 4 were measured, respectively.

Next, the dust protection, the liquid protection of the layered nonwoven fabric, and the liquid protection of the joint region were evaluated according to the evaluation criteria in Table 1, and the comprehensive evaluation was evaluated according to the evaluation criteria in Table 2. Numerical values and evaluation results are shown in Table 3.

### (Example 2)

In the cloth of Example 1, the coating amount of the antistatic agent 7 on the first outermost layer 2a of the layered nonwoven fabric 2 was 0.135 g/m², so that the content of the antistatic agent was 0.3% by mass, and the coating amount of the antistatic agent 7 on the second outermost layer 2b of the layered nonwoven fabric 2 was 0 g/m², so that the content of the antistatic agent was 0% by mass. The adhesive resin layer 4b of the tape member 4 had a film thickness of 40 um.

Next, the layered nonwoven fabric 2 was cut into a part shape of the cloth shown in Figs. 6 to 7, and the cut parts were fused together by an ultrasonic fusing machine to form a fused region 5b shown in Fig. 2. Next, the tape member 4 was disposed on the inner side of the cloth, the fused region 5b was covered with the adhesive resin layer 4b of the tape member 4, and the same adhesion processing as in Example 1 was performed. Both the end portions 4c of the tape member 4 in the short-side direction were fixed in contact with the second outermost layer 2b of the layered nonwoven fabric 2, and the tape member 4 extended along the longitudinal direction of the fused region 5b to form the joint region 3 having the tape member 4 in a rectangular shape, thereby obtaining cloth 1. Note that, in the joint region 3, the surfaces horizontal to the thickness direction at two end portions of the two layered nonwoven fabrics faced each other in the fused region.

The cloth 1 was obtained under the same conditions as in Example 1 except for the configurations of the layered nonwoven fabric 2, the joint region 3, and the tape member 4. Numerical values and evaluation results are shown in Table 3.

### (Example 3)

In the cloth of Example 1, the basis weight of the first outermost layer 2a of the layered nonwoven fabric 2 was 25 g/m² and the coating amount of the antistatic agent 7 was 0.05 g/m², so that the content of the antistatic agent was 0.2% by mass, and the basis weight of the second outermost layer 2b of the layered nonwoven fabric 2 was 10 g/m² and the coating amount of the antistatic agent 7 was 0 g/m², so that the content of the antistatic agent was 0% by mass. As a configuration of the tape member 4, for the base material layer 4a, a polyester taffeta fabric, that is, a polyester woven fabric was used in which a plain woven fabric that uses a polyester filament yarn of 33dtex-26f for both warp and weft fibers, and has a warp yarn density of 207 yarns/inch and a weft yarn density of 147 yarns/inch was woven, then relaxed scoured and circular dyed 130°C, dried, and then calendered at 180°C top and 60°C bottom. The adhesive resin layer 4b of the tape member 4 had a film thickness of 40 µm.

The cloth 1 was obtained under the same conditions as in Example 1 except for the configurations of the layered nonwoven fabric 2 and the tape member 4. Numerical values and evaluation results are shown in Table 3.

### (Example 4)

In the cloth of Example 1, the basis weight of the first outermost layer 2a of the layered nonwoven fabric 2 was 55 g/m² and the coating amount of the antistatic agent 7 was 0.0825 g/m², so that the content of the antistatic agent was 0.15% by mass, and the basis weight of the second outermost layer 2b of the layered nonwoven fabric 2 was 35 g/m² and the coating amount of the antistatic agent 7 was 0 g/m², so that the content of the antistatic agent was 0% by mass. As a configuration of the tape member 4, a polypropylene film was used for the base material layer 4a. The adhesive resin layer 4b of the tape member 4 had a film thickness of 150 µm.

The cloth 1 was obtained under the same conditions as in Example 1 except for the configurations of the layered nonwoven fabric 2 and the tape member 4. Numerical values and evaluation results are shown in Table 3.

### (Example 5)

In the cloth of Example 1, the basis weight of the first outermost layer 2a of the layered nonwoven fabric 2 was 18 g/m² and the coating amount of the antistatic agent 7 was 0.081 g/m², so that the content of the antistatic agent was 0.45% by mass, and the basis weight of the second outermost layer 2b of the layered nonwoven fabric 2 was 4 g/m² and the coating amount of the antistatic agent 7 was 0 g/m², so that the content of the antistatic agent was 0% by mass. As a configuration of the tape member 4, a polypropylene film was used for the base material layer 4a. The adhesive resin layer 4b of the tape member 4 had a film thickness of 9 µm.

The cloth 1 was obtained under the same conditions as in Example 1 except for the configurations of the layered nonwoven fabric 2 and the tape member 4. Numerical values and evaluation results are shown in Table 3.

### (Example 6)

In the cloth of Example 1, the basis weight of the first outermost layer 2a of the layered nonwoven fabric 2 was 55 g/m² and the coating amount of the antistatic agent 7 was 0.0825 g/m², so that the content of the antistatic agent was 0.15% by mass, and the basis weight of the second outermost layer 2b of the layered nonwoven fabric 2 was 4 g/m² and the coating amount of the antistatic agent 7 was 0 g/m², so that the content of the antistatic agent was 0% by mass. As an intermediate layer of the layered nonwoven fabric 2, a polyethylene microporous film, that is, a film made of a polyethylene resin that has physical properties of a thickness of 14 um, a melting point of 137°C, a microporous pore diameter of 32 µm, a moisture permeability of 380 g/m² · h, a tensile strength (warp) of 40 N/50 mm, a tensile strength (weft) of 40 N/50 mm, a tensile elongation (warp) of 10%, a tensile elongation (weft) of 8%, a water pressure resistance of 65 kPa, and a puncture strength of 370 N/mm was used. The adhesive resin layer 4b of the tape member 4 had a film thickness of 250 µm.

The cloth 1 was obtained under the same conditions as in Example 1 except for the configurations of the layered nonwoven fabric 2 and the tape member 4. Numerical values and evaluation results are shown in Table 4.

### (Comparative Example 1)

In the joint region 3 of the cloth of Example 1, the sewn region 5b and the layered region 5a were disposed so that the exposure direction of the seam allowance 5 was on the outer side of the cloth 1. The tape member 4 was disposed on the outer side of the cloth, the seam allowance 5 was covered with the adhesive resin layer 4b of the tape member 4, and both the end portions 4c of the tape member 4 in the short-side direction were fixed so as to be in contact with the first outermost layer 2a of the layered nonwoven fabric 2 to form the joint region 3.

The cloth 1 was obtained under the same conditions as in Example 1 except for the configuration of the joint region 3. Numerical values and evaluation results are shown in Table 4.

### (Comparative Example 2)

In the cloth of Example 1, the coating amount of the antistatic agent 7 on the first outermost layer 2a of the layered nonwoven fabric 2 was 0.0045 g/m², so that the content of the antistatic agent was 0.01% by mass, and the coating amount of the antistatic agent 7 on the second outermost layer 2b of the layered nonwoven fabric 2 was 0.075 g/m², so that the content of the antistatic agent was 0.3% by mass.

The cloth 1 was obtained under the same conditions as in Example 1 except for the configuration of the layered nonwoven fabric 2. Numerical values and evaluation results are shown in Table 4.

### (Comparative Example 3)

In the cloth of Example 1, the coating amount of the antistatic agent 7 on the first outermost layer 2a of the layered nonwoven fabric 2 was 0.0045 g/m², so that the content of the antistatic agent was 0.01% by mass, and the coating amount of the antistatic agent 7 on the second outermost layer 2b of the layered nonwoven fabric 2 was 0.075 g/m², so that the content of the antistatic agent was 0.3% by mass. The joint region 3 did not include the tape member 4, but is formed by sewing the parts obtained by cutting the layered nonwoven fabric 2 together with a sewing machine, with only the seam allowance 5 consist of the sewn region 5b and the layered region 5a.

The cloth 1 was obtained under the same conditions as in Example 1 except that the configuration of the layered nonwoven fabric 2 and the joint region 3 and the configuration not using the tape member 4 were used. Numerical values and evaluation results are shown in Table 4.

### (Comparative Example 4)

In the cloth of Comparative Example 3, instead of the layered nonwoven fabric 2, a single layer nonwoven fabric, that is, a spunbond nonwoven was used in which the content of the antistatic agent was 0.01% by mass by setting the basis weight to 45 g/m² and the coating amount of the antistatic agent 7 to 0.0045 g/m², and the cloth 1 was obtained under the same conditions as in Comparative Example 3 except for the above-mentioned configuration. Numerical values and evaluation results are shown in Table 4.

**[Table 3-1]**

| | | Example 1 | Example 2 | Example 3 | Example 9 | Example 5 |
|---|---|---|---|---|---|---|
| Configuration | Configuration of first outermost layer of layered nonwoven fabric | Spunbond nonwoven | Spunbond nonwoven | Spunbond nonwoven | Spunbond nonwoven | Spunbond nonwoven |
| | Configuration of intermediate layer of layered nonwoven fabric | Meltblown nonwoven | Meltblown nonwoven | Meltblown nonwoven | Meltblown nonwoven | Meltblown nonwoven |
| | Configuration of second outermost layer of layered nonwoven fabric | Spunbond nonwoven | Spunbond nonwoven | Spunbond nonwoven | Spunbond nonwoven | Spunbond nonwoven |
| | Base material layer of tape member | Polypropylene film | Polypropylene film | Polyester taffeta | Polypropylene film | Polypropylene film |
| | Adhesive resin layer of tape member | Thermoplastic hot melt | Thermoplastic hot melt | Thermoplastic hot melt | Thermoplastic hot melt | Thermoplastic hot melt |
| | Exposure direction of seam allowance | Inner side | None | Inner side | Inner side | Inner side |
| | Arrangement position of tape member | Inner side | Inner side | Inner side | Inner side | Inner side |
| | Fixed layers at both end portions of tape member in short-side direction | Second outermost layer | Second outermost layer | Second outermost layer | Second outermost layer | Second outermost layer |
| Measurement | Water pressure resistance of layered nonwoven fabric (mmH₂O) | 1400 | 1400 | 1199 | 1178 | 1050 |
| | Water pressure resistance of joint region (mmH₂O) | 1150 | 1350 | 800 | 720 | 450 |
| | Ratio of water pressure resistance between joint region and layered nonwoven fabric | 0.82 | 0.96 | 0.70 | 0.61 | 0.43 |
| | Content of antistatic agent: first outermost layer of layered nonwoven fabric (% by mass) | 0.30 | 0.30 | 0.20 | 0.15 | 0.45 |
| | Content of antistatic agent: second outermost layer of layered nonwoven fabric (% by mass) | 0.00 | 0.00 | 0.00 | 0.00 | 0.00 |
| | Surface resistance (Ω) | 1.3 x 10^9 | 1.3 x 10^9 | 1.8 x 10^9 | 2.5 x 10^9 | 1.6 x 10^9 |
| | Basis weight of first outermost layer of layered nonwoven fabric (g/m²) | 95 | 95 | 25 | 55 | 18 |
| | Basis weight of second outermost layer of layered nonwoven fabric (g/m²) | 25 | 25 | 10 | 35 | 9 |
| | Thickness of adhesive resin layer of tape member (pm) | 150 | 40 | 40 | 150 | 9 |
| | Air permeability (cm³/cm²/sec) | 7.6 | 7.6 | 8.5 | 1.9 | 3.0 |
| Evaluation | Dust protection | 3 | 3 | 2 | 1 | 2 |
| | Liquid protection (layered nonwoven fabric) | 3 | 3 | 2 | 2 | 1 |
| | Liquid protection (joint region) | 3 | 3 | 2 | 2 | 1 |
| | Comprehensive evaluation | 9 | 9 | 6 | 5 | 4 |

**[Table 4]**

| | | Example 6 | Comparative Example 1 | Comparative Example 2 | Comparative Example 3 | Comparative Example 4 |
|---|---|---|---|---|---|---|
| Configuration | Configuration of first outermost layer of layered nonwoven fabric | Spunbond nonwoven | Spunbond nonwoven | Spunbond nonwoven | Spunbond nonwoven | Spunbond nonwoven |
| | Configuration of intermediate layer of layered nonwoven fabric | Polyethylene Film | Meltblown nonwoven | Meltblown nonwoven | Meltblown nonwoven | - |
| | Configuration of second outermost layer of layered nonwoven fabric | Spunbond nonwoven | Spunbond nonwoven | Spunbond nonwoven | Spunbond nonwoven | - |
| | Base material layer of tape member | Polypropylene film | Polypropylene film | Polypropylene film | - | - |
| | Adhesive resin layer of tape member | Thermoplastic hot melt | Thermoplastic hot melt | Thermoplastic hot melt | - | - |
| | Exposure direction of seam allowance | Inner side | Outer side | Inner side | Inner side | Inner side |
| | Arrangement position of tape member | Inner side | Outer side | Inner side | - | - |
| | Fixed layers at both end portions of tape member in short-side direction | Second outermost layer | First outermost layer | Second outermost layer | - | - |
| Measurement | Water pressure resistance of layered nonwoven fabric (mmH₂O) | 9500 | 1400 | 1400 | 1400 | 150 |
| | Water pressure resistance of joint region (mmH₂O) | 4000 | 250 | 400 | 100 | 50 |
| | Ratio of water pressure resistance between joint region and layered nonwoven fabric | 0.42 | 0.18 | 0.29 | 0.07 | 0.33 |
| | Content of antistatic agent: first outermost layer of layered nonwoven fabric (% by mass) | 0.15 | 0.30 | 0.01 | 0.01 | 0.01 |
| | Content of antistatic agent: second outermost layer of layered nonwoven fabric (% by mass) | 0.00 | 0.00 | 0.30 | 0.30 | 0.01 |
| | Surface resistance (Ω) | 2.5 x 10^9 | 1.3 x 10^9 | 1.0 x 10^15 | 1.0 x 10^15 | 1.0 x 10^17 |
| | Basis weight of first outermost layer of layered nonwoven fabric (g/m²) | 55 | 45 | 95 | 95 | 95 |
| | Basis weight of second outermost layer of layered nonwoven fabric (g/m²) | 9 | 25 | 25 | 25 | - |
| | Thickness of adhesive resin layer of tape member (pm) | 250 | 150 | 150 | | - |
| | Air permeability (cm³/cm²/sec) | 0.01 | 7.6 | 7.6 | 7.6 | 50.0 |
| Evaluation | Dust protection | 1 | 3 | -3 | -3 | -3 |
| | Liquid protection (layered nonwoven fabric) | 3 | 3 | 3 | 3 | -3 |
| | Liquid protection (joint region) | 1 | -3 | -2 | -3 | -3 |
| | Comprehensive evaluation | 5 | 3 | -2 | -3 | -9 |

In the cloth of Examples 1 to 6, the content of the antistatic agent 7 in each of the first outermost layer 2a and the second outermost layer 2b of the layered nonwoven fabric 2 was set within a preferable range, an arrangement of each layer in the cloth and the joint region 3 were set to a preferable aspect, and the water pressure resistance of the layered nonwoven fabric 2 and the ratio of the water pressure resistance of the layered nonwoven fabric 2 to the water pressure resistance of the joint region 3 were set within preferable ranges, so that the cloth was excellent in dust protection and liquid protection.

In the cloth of Examples 1 to 4, the configuration of the tape member 4 and the thickness 4d of the adhesive resin layer 4b were set within preferable ranges, so that the cloth was more excellent in liquid protection at the joint region.

The cloth of Examples 1 to 3 was cloth having air permeability in addition to dust protection and liquid protection by setting the nonwoven fabric structure and basis weight of each layer of the layered nonwoven fabric 2 within preferred ranges.

In the cloth of Comparative Example 1, the seam allowance 5 of the joint region 3 and the tape member 4 were disposed on the first outermost layer 2a of the layered nonwoven fabric 2 having a high content of the antistatic agent, that is, on the outer side of the cloth 1, so that the cloth was inferior in liquid protection at the joint region.

In the cloth of Comparative Example 2, the content of the antistatic agent 7 in the first outermost layer 2a and the second outermost layer 2b of the layered nonwoven fabric 2 and the ratio of the water pressure resistance between the joint region 3 and the layered nonwoven fabric 2 were set to ranges different from the preferable ranges, so that the cloth was inferior in dust protection and liquid protection at the joint region.

The cloth of Comparative Example 3 further had an aspect in which the tape member was not used for the joint region 3, so that the cloth was inferior in dust protection and liquid protection at the joint region.

The cloth of Comparative Example 4 further had an aspect in which a single-layer nonwoven fabric was used instead of the layered nonwoven fabric 2, and a tape member was not used, so that the cloth was inferior in all of dust protection, liquid protection of the layered nonwoven fabric, and liquid protection at the joint region.

In other words, the more requirements of the invention are satisfied, the more comprehensively the cloth of the present invention is excellent.

### INDUSTRIAL APPLICABILITY

The present invention can be used as cloth having dust protection and liquid protection.

### DESCRIPTION OF REFERENCE SIGNS

1: Cloth
1a: Outer side of cloth
1b: Inner side of cloth
2: Layered nonwoven fabric
2a: First outermost layer of layered nonwoven fabric
2b: Second outermost layer of layered nonwoven fabric
3: Joint region
4: Tape member
4a: Base material layer of tape member
4b: Adhesive resin layer of tape member
4c: End portion of tape member in short-side direction
4d: Thickness of adhesive resin layer of tape member
5: Seam allowance
5a: Layered region
5b: At least one of sewn region and fused region
6a: First spunbond nonwoven
6b: Second spunbond nonwoven
6c: Meltblown nonwoven
7: Antistatic agent

## Claims

1. Cloth that is composed of a layered nonwoven fabric and members including a tape member in a rectangular shape, and includes a joint region,
wherein a first outermost layer of the layered nonwoven fabric is a nonwoven fabric containing 0.02 to 0.50% by mass of an antistatic agent relative to the entire layer, and is located on an outer side of the cloth,
a second outermost layer of the layered nonwoven fabric is a nonwoven fabric containing 0.01% by mass or less of an antistatic agent relative to the entire layer, and is located on an inner side of the cloth,
the joint region includes a seam allowance located on the inner side of the cloth and the tape member,
the seam allowance includes a layered region formed by layering a part of one or more of the layered nonwoven fabrics,
the layered region includes at least one of a sewn region and a fused region,
the seam allowance is covered with the tape member, the tape member is located on the inner side of the cloth,
at least both end portions of the tape member in a short-side direction are fixed to the second outermost layer,
water pressure resistance (A) of the layered nonwoven fabric measured according to JIS L 1092 (2009) A method is in a range of 1,000 mmH₂O to 1,0000 mmH₂O, and
a ratio of water pressure resistance (B) of the joint region measured according to JIS L 1092 (2009) A method to the water pressure resistance (A) (water pressure resistance (B)/water pressure resistance (A)) is 0.4 to 1.0.

2. Cloth that is composed of a layered nonwoven fabric and members including a tape member in a rectangular shape, and includes a joint region,
wherein a first outermost layer of the layered nonwoven fabric is a nonwoven fabric containing 0.02 to 0.50% by mass of an antistatic agent relative to the entire layer, and is located on an outer side of the cloth,
a second outermost layer of the layered nonwoven fabric is a nonwoven fabric containing 0.01% by mass or less of an antistatic agent relative to the entire layer, and is located on an inner side of the cloth,
the joint region includes at least one of a sewn region and a fused region, and the tape member,
in at least one of the sewn region and the fused region, surfaces horizontal to a thickness direction at two end portions of at least one of the layered nonwoven fabrics face each other,
at least one of the sewn region and the fused region is covered with the tape member,
the tape member is located on the inner side of the cloth,
at least both end portions of the tape member in a short-side direction are fixed to the second outermost layer,
water pressure resistance (A) of the layered nonwoven fabric measured according to JIS L 1092 (2009) A method is in a range of 1,000 mmH₂O to 1,0000 mmH₂O, and
a ratio of water pressure resistance (B) of the joint region measured according to JIS L 1092 (2009) A method to the water pressure resistance (A) (water pressure resistance (B)/water pressure resistance (A)) is 0.4 to 1.0.

3. The cloth according to claim 1 or 2, wherein
the layered nonwoven fabric includes a first spunbond nonwoven, a meltblown nonwoven, and a second spunbond nonwoven in this order,
a basis weight of the first spunbond nonwoven is 20 to 50 g/m², and a basis weight of the second spunbond nonwoven is 5 to 30 g/m², and
the basis weight of the second spunbond nonwoven is smaller than the basis weight of the first spunbond nonwoven.

4. The cloth according to claim 1 or 2, wherein
the tape member is a layered body including a base material layer and an adhesive resin layer,
a thickness of the adhesive resin layer is 100 to 200 um, and
the adhesive resin layer is in contact with the second outermost layer.

5. The cloth according to claim 1 or 2, wherein the layered nonwoven fabric has an air permeability of 2.0 to 40.0 cm³/cm²/sec as measured according to JIS L 1913 (2010) 6.8 (Frazier type method).
